# EUROPEAN PATENT APPLICATION

(11) **EP 2 105 985 A1**
(43) Date of publication of application: **30.09.2009**
(21) Application number: 09154856.0
(22) Date of filing: 11.03.2009
(51) Int. Cl.: H01M 4/58, H01M 4/02, H01M 10/40

(54) **Carbon Material for Negative Electrode, Electric Storage Device, and Product Having Mounted Thereon Electric Storage Device**

(30) Priority: 25.03.2008 JP 2008078469
(71) Applicant: Fuji Jukogyo Kabushiki Kaisha, Tokyo 160-8316 (JP)
(72) Inventor: Kojima, Kenji, Tokyo 160-8316 (JP); Ando, Nobuo, Tokyo 160-8316 (JP)
(74) Representative: Sajda, Wolf E.

(57) **Abstract**

Mesoporous graphite is used as an active material of a negative electrode (11, 110) constituting a lithium ion secondary battery (10) or a lithium ion capacitor (100). Specifically, the mesoporous graphite has a specific area within the range of 0.01 m²/g or more and 5 m²/g or less, and the total volume of mesopores is within the range of 0,005 ml/g or more and 1.0 ml/g or less, wherein the volume of mesopores each having a pore diameter of 10 nm or more and 40 nm or less is 25 % or more and 85 % or less of the total volume of mesopores. By this structure, the output characteristic is enhanced.

## Description

### BACKGROUND OF THE INVENTION

### 1. Field of the Invention

The present invention relates to a carbon material for a negative electrode, and more particularly to a technique that is well adaptable to a negative electrode of an electric storage device.

### 2. Description of the Related_ Arts

In the recent situation where the environmental issue, particularly the vehicle-exhaust gas emission, is widely talked about, efforts are made for developing environment-friendly electric vehicles and the like. In the electric vehicle development, the strong development effort is focused on the electric storage device to be used as a power source. Many types of electric storage devices have been proposed for replacement of the conventional lead batteries.

Current attention has been focused on an electric storage device such as a lithium ion secondary battery, lithium ion capacitor, electric double layer capacitor, etc. Some of the devices are mounted on a real vehicle, and a test for an execution has been carried out in order to put the electric storage device to practical use. However, a further development has still been in progress for components of the electric storage device.

For example, a development involved with a technique of a negative electrode in the electric storage device has been carried out as one of the development of components. So far, various carbon materials, for example, have been employed as the material of the negative electrode. Examples of the various carbon materials include natural graphite, artificial graphite, non-graphitizable carbon material, graphitizing carbon material, etc.

In some cases, the magnitude of a parameter of a required physical property might be inversed depending upon the type of electric storage devices, an example of which is a specific area. A smaller specific area is better in a negative electrode material for a lithium ion secondary battery, considering a high coulomb efficiency. On the other hand, a larger specific area is preferable in an electrical double layer capacitor from the viewpoint of the electric storage function.

A specific area in a carbon material used for a lithium ion secondary battery measured in accordance with BET method is generally 3 m²/g or more. On the other hand, a specific area in a carbon material used for an electric double layer capacitor measured in accordance with BET method is generally 1000 m²/g or more.

The document JP-A-2003-317 717 discloses an example in which a carbon material is used for a negative electrode of a lithium ion secondary battery. The document JP-A-2006-303 330 discloses an example in which a carbon material is used for a negative electrode of a lithium ion capacitor.

Graphite is mostly used as a negative electrode material of an ordinary lithium-based electric storage device. However, such an electric storage device involves intercalation, so that an improvement in an output characteristic has been demanded. In order to increase an output, a graphite material having little pores is pulverized so as to allow mesopores and macropores to appear. However, since micropores simultaneously appear with the pulverization, and a specific area increases, the coulomb efficiency is decreased, which causes a deterioration in capacity of the lithium ion secondary battery, which is not preferable. In a lithium ion capacitor, surplus lithium ions, which are not involved in actual charging and discharging, has to be pre-doped, which is not preferable.

### SUMMARY OF THE INVENTION

The present invention aims to provide a technique relating to a graphite material that can be used as a negative electrode material of a lithium ion secondary battery or a lithium ion capacitor.

The foregoing and other objects and novel features of the present invention will be apparent from the description of the specification of the present application and the attached drawings.

A summary of the representative invention, among various embodiments of the invention described in the present application, will be explained below.

Specifically, when mesopores each having a pore diameter of 2 nm (20 angstrom) or more and 50 nm (500 angstrom) or less are defined as micropores in accordance with the micropore classification of the IUPAC, the total volume of mesopores in a graphite material is limited within a range of 0.005 ml/g or more and 1.0 ml/g or less. Further, a volume of mesopores each having a pore diameter of 10 nm (100 angstrom) or more and 40 nm (400 angstrom) or less is 25 % or more and 85 % or less of the total volume of mesopores, a specific area of a graphite is limited within the range of 0.01 m²/g or more and 5 m²/g or less measured in accordance with BET method.

By using a graphite on which the limitation described above is imposed, irreversible capacity upon at the time of charging is decreased, and the characteristic of the electric storage device is enhanced.

The effect obtained by the representative invention will briefly be described below.

In the present invention, the structure of the graphite is changed such that the total volume of mesopores defined to be micropores each having a pore diameter of 2 nm (20 angstrom) or more and 50 nm (500 angstrom) or less is limited within a range of 0.005 ml/g or more and 1.0 ml/g or less, and a specific area of the graphite, in which a volume of mesopores each having a pore diameter of 10 nm (100 angstrom) or more and 40 nm (400 angstrom) or less is 25 % or more and 85 % or less of the total volume of mesopores, is limited within the range of 0.01 m²/g or more and 5 m²/g or less measured in accordance with BET method. By this configuration, irreversible capacity at the time of the charging is reduced, and the characteristic of the electric storage device is enhanced.

### BRIEF DESCRIPTION OF THE DRAWINGS

- FIG. 1: is a sectional view schematically showing a structure of a lithium ion secondary battery to which a negative electrode according to the present invention is applied; and
- FIG. 2: is a sectional view schematically showing a structure of a lithium ion capacitor to which a negative electrode according to the present invention is applied.

### DETAILED DESCRIPTION OF THE PREFERRED EMBODIMENTS

An embodiment of the present invention will be described below in detail with reference to the drawings. The present invention relates to a technique for enhancing characteristics of an electric storage device. Specifically, the present invention relates to a technique of an electrode material applicable to an electric storage device such as a lithium ion secondary battery, lithium ion capacitor, etc. Particularly, the present invention relates to a technique relating to graphite used as a negative electrode material.

In an electric storage device in which lithium ions move between a positive electrode and a negative electrode at the time of the charging or discharging, the lithium ions are doped into the graphite material in the negative electrode at the time of the charging. At the initial charging, the lithium ions and electrolyte solution are reacted so as to form a coating film on the surface of the graphite grain, when the lithium ions are doped. The lithium ions used for the formation of the coating film causes irreversible capacity.

The lithium ions used to form the coating film are substantially not involved in the electromotive force or electric storage function of the electric storage device. Therefore, when the amount of the lithium ions involved in the irreversible capacity increases, the characteristic of the electric storage device is deteriorated as a whole.

In general, the irreversible capacity increases according to the specific area of the graphite material used for the negative electrode. When a lithium ion secondary battery is assumed as the electric storage device, the specific area of the graphite is preferably 5 m²/g or less. When the specific area exceeds 5 m²/g, the ratio of the irreversible capacity increases. On the other hand, it is necessary that the specific area measured in accordance with the BET method is not less than 0.01 m²/g. When the specific area is not more than 0.01 m²/g, a liquid retention amount of the electrolyte solution is decreased, whereby disadvantages such as increased resistance might be generated.

The value of the specific area is the value measured in accordance with the BET method. When the specific area is measured in accordance with a method other than the BET method, the value converted in terms of the BET method may fall within 0.01 m²/g or more and 5 m²/g or less. Hereinafter, a specific area is a value measured in accordance with BET method, unless otherwise noted.

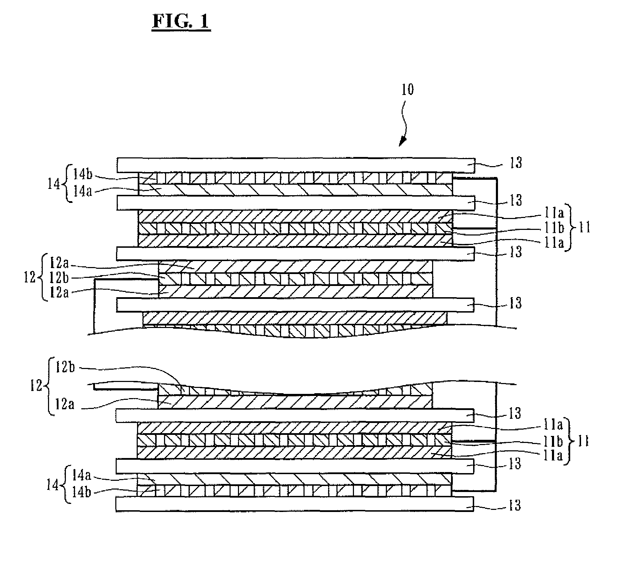

For example, the lithium ion secondary battery to which the present invention is applied is configured as shown in FIG. 1. Specifically, a lithium ion secondary battery 10 includes negative electrodes 11 and positive electrodes 12. Each of the negative electrodes 11 and each of the positive electrodes 12 are laminated with a separator 13 interposed therebetween. The negative electrodes 11 are located at the ends of the laminate unit composed of plural negative electrodes 11 and plural positive electrodes 12.

Lithium electrodes 14, serving as a lithium ion source to the negative electrodes, are provided so as to be opposite to the negative electrodes 11 located at the ends of the laminate unit with the separators 13 interposed therebetween. As shown in FIG. 1, each of the lithium electrodes 14 has a metal lithium 14a formed on a current collector 14b. The lithium ions eluted from the lithium electrodes 14 are pre-doped into the negative electrodes 11.

The negative electrode 11 includes a current collector 11b containing a graphite as an active material 11a. The graphite used as the active material 11a is formed as described below. Specifically, when mesopores each having a pore diameter of 2 nm (20 angstrom) or more and 50 nm (500 angstrom) or less are defined as micropores in accordance with the micropore classification of the IUPAC, the total volume of mesopores is limited within a range of 0.005 ml/g or more and 1.0 ml/g or less, and a specific area of the graphite, in which a volume of mesopores each having a pore diameter of 10 nm (100 angstrom) or more and 40 nm (400 angstrom) or less is 25 % or more and 85 % or less of the total volume of mesopores, is limited within the range of 0.01 m²/g or more and 5 m²/g or less. The volume of mesopores is obtained by the Dollimore-Heal method (DH method) of desorption isotherm. Hereinafter, the volume of mesopores is a volume of mesopores having diameters of 2 nm (20 angstrom) or more and 50 nm (500 angstrom) or less, unless otherwise noted.

The active material 11a for the negative electrode is formed into a mixture for the electrode together with a binder, and is coated on the punched surface of the current collector 11b with a predetermined thickness. For example, the mixture layer described above can be formed such that slurry is firstly formed, and then the slurry is coated on the current collector 11b by a coater. The aperture ratio of the current collector 11b is, for example, 40 % to 60 %. After the mixture layer has been coated on the current collector 11b, the resultant is dried to fabricate the electrode.

Each of the positive electrodes 12 includes a positive electrode active material 12a formed on a current collector 12b. The positive electrode active material 12a is formed into a mixture for the electrode together with a binder. The positive electrode active material 12a is formed on the punched surface of the current collector 12b with a predetermined thickness. The aperture ratio of the current collector 12b is, for example, 40 % to 60 %. After the mixture layer has been coated on the current collector 12b, the resultant is dried to fabricate the electrode.

An electrode laminate unit is thus formed by laminating negative electrodes 11 and positive electrodes 12 alternately, wherein the separator 13 is interposed between each of the negative electrodes 11 and the positive electrodes 12, and the lithium electrodes 14 are located at the ends of the electrode laminate unit. The electrode laminate unit thus formed is impregnated into electrolyte solution (not shown) so as to be formed into a cell.

The structure using a graphite material for the negative electrode is similarly applied to a lithium ion capacitor. In a capacitor in which lithium ions do not move between a positive electrode and a negative electrode, the limitation on the specific area described above is not required. Basically, in the case of such a capacitor, since the charges are accumulated by an electric double layer, a larger specific area is preferable and the limitation of the specific area of not more than 5 m²/g is unnecessary. The configuration of the present invention is applicable to a lithium ion capacitor.

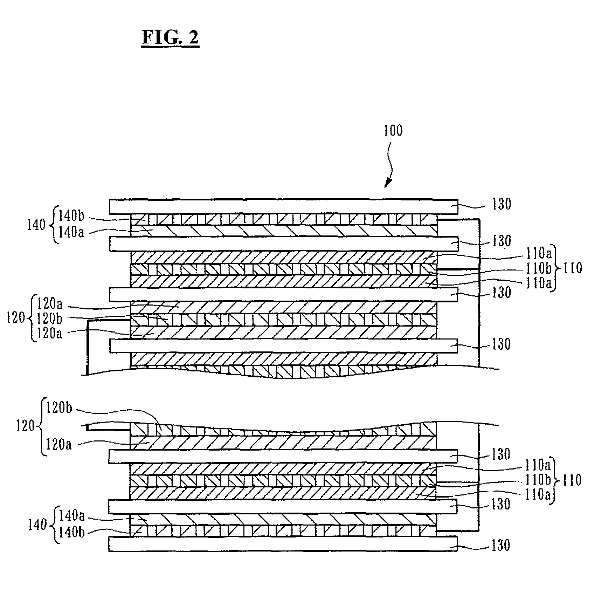

The lithium ion capacitor having the above-mentioned configuration is configured as shown in FIG. 2, for example. Specifically, the lithium ion capacitor 100 includes negative electrodes 110 and positive electrodes 120. Each of the negative electrodes 110 and each of the positive electrodes 120 are laminated with a separator 130 interposed therebetween. The negative electrodes 110 are located at the ends of the laminate unit composed of plural negative electrodes 110 and plural positive electrodes 120.

Lithium electrodes 140, serving as a lithium ion source to the negative electrodes, are provided so as to be opposite to the negative electrodes 110 located at the ends of the laminate unit with the separators 130 interposed therebetween. As shown in FIG. 2, each of the lithium electrodes 140 has a metal lithium 140a formed on a current collector 140b. The lithium ions eluted from the lithium electrodes 140 are pre-doped into the negative electrodes 110.

Each of the negative electrodes 110 includes a current collector 110b containing a graphite as an active material 110a. The graphite used as the active material 110a is formed as described below. Specifically, the total volume of mesopores is limited within a range of 0.005 ml/g or more and 1.0 ml/g or less, and a specific area of the graphite, in which a volume of mesopores each having a pore diameter of 10 nm (100 angstrom) or more and 40 nm (400 angstrom) or less is 25 % or more and 85 % or less of the total volume of mesopores, is limited within the range of 0.01 m²/g or more and 5 m²/g or less.

The active material 110a for the negative electrode is formed into a mixture for the electrode together with a binder, and is coated on the punched surface of the current collector 110b with a predetermined thickness. The aperture ratio of the current collector 110b is, for example, 40 to 60 %. After the mixture layer has been coated on the current collector 110b, the resultant is dried to fabricate the electrode.

Each of the positive electrodes 120 includes a positive electrode active material 120a formed on a current collector 120b. The positive electrode active material 120a is formed into a mixture for the electrode together with a binder. The positive electrode active material 120a is coated on the punched surface of the current collector 120b with a predetermined thickness. The aperture ratio of the current collector 120b is, for example, 40 % to 60 %.

After the mixture layer has been coated on the current collector 120b, the resultant is dried to fabricate the electrode. In the lithium ion capacitor having the above-mentioned configuration, the "positive electrodes" mean the electrodes from which electric current flows upon the discharge, while the "negative electrodes" mean the electrodes into which electric current flows upon the discharge.

In the lithium ion capacitor, the potentials of the positive electrodes and the negative electrodes, after the negative electrodes and the positive electrodes have been short-circuited, are preferably 2.0 V or less. In order to obtain a high capacity, it is necessary in the lithium ion capacitor according to the present invention that the potential of the positive electrodes, after the negative electrodes and the positive electrodes have been short-circuited, which is normally about 3.0 V before doping, is preferably set to 2 V or less, for example, by doping lithium ions into the negative electrodes, or positive electrodes, or both of the negative electrodes and the positive electrodes. By doping the lithium, the potential of the positive electrode which is normally discharged to about 3.0 V can be discharged to 2.0 V or less, and the capacity can be increased.

In the lithium ion capacitor in the present invention, it is preferable that the capacitance of the negative electrode per unit weight is three or more times larger than the capacitance of the positive electrode per unit weight. Further, it is preferable that the weight of the positive electrode active material is larger than that of the negative electrode active material. By so selecting the capacitance and the weight, the lithium-ion capacitor of high voltage and high capacity can be obtained because the weight of the negative electrode active material can be decreased, and the weight of the positive electrode active material can be increased without changing the potential change of the negative electrode.

In the description above, the mixture layer of the active material constituting the electrode is formed on both surfaces of the current collector having holes penetrating therethrough. However, the mixture layer made of the active material can be formed on one surface of the current collector.

In the description above, a laminate-type cell structure is illustrated. However, another cell structure can also be employed. The electric storage device such as a lithium ion secondary battery, lithium ion capacitor, or the like can be formed into a cylindrical cell having band-like positive electrode and negative electrode wound through a separator.

Alternatively, the electric storage device can be formed into a rectangular cell in which a plate-like positive electrode and a plate-like negative electrode are laminated with a separator in three or more layers. Further, the electric storage device can be formed into a large-capacity cell, such as a film-type cell, in which a plate-like positive electrode and a plate-like negative electrode are laminated with a separator in three or more layers, and the resultant is sealed in an outer packaging film.

The graphite material used for the negative electrode of the electric storage device thus configured can be formed by using KS-6 manufactured by Timcal Ltd., for example. The graphite indicated by KS-6 is obtained by pulverizing artificial graphite KS-25 or the like, which is manufactured by Timcal Ltd. having a grain diameter of about 25 µm, whereby the graphite KS-6 has a value D50 of 3 µm to 4 µm. However, the specific area of this graphite is as large as about 20 m²/g,

Therefore, the irreversible capacity is large, and the coulomb efficiency is extremely low. Accordingly, this graphite has not at all been considered so far for use as a negative electrode material of a lithium ion secondary battery.

However, the present inventors have found that the specific area can be controlled by covering the micropores by performing a CVD (chemical vapor deposition) process on the graphite material under a suitable condition. Specifically, the present inventors have found that the irreversible capacity can be suppressed. With this finding, the present inventors have firstly found that the graphite material subject to the CVD process can be used as a negative electrode material of a lithium ion secondary battery and a lithium ion capacitor.

For example, 100 g of the KS-6 is put into a rotary kiln having an internal volume of 18 liter, and then temperature is raised. For example, the temperature is raised up to 900 °C with 5 °C/min. When the temperature is raised to 900 °C, this temperature is maintained. Bubbled nitrogen gas is sprayed into toluene solution under the condition in which the temperature of 900 °C is maintained. The present inventors have found that the graphite having a predetermined specific area can be obtained by adjusting the spraying time.

When the ratio of the volume of mesopores each having a pore diameter of 10 nm (100 angstrom) or more and 40 nm (400 angstrom) or less to the total volume of mesopores is less than 25 %, the mobility of the lithium ions or solvated lithium ions is decreased, with the result that the ion conductivity is lowered, which is not preferable. When the above-mentioned ratio is greater than 85 %, it is considered that the powder density becomes too small, which is not preferable.

The graphite obtained by the above-mentioned fabricating method is used as the active material of the negative electrode material, whereby the lithium ion secondary battery or the lithium ion capacitor described above can be composed.

In contrast to the graphite in the negative electrode containing the graphite, the one containing oxide of at least one kind of metal element selected from V or VI group element of periodic table is used, in a broad sense, for a positive electrode of a lithium ion secondary battery. Examples of the metal oxide include vanadium oxide or niobium oxide. Vanadium pentoxide is more preferable.

In the vanadium oxides, vanadium pentoxide (V₂O₅) has a structure in which a pentahedral unit having VO₅ as one unit spreads in a two-dimensional direction with a covalent bond so as to form a single layer. The layers described above are laminated to form a layered structure as a whole. Lithium ions can be doped between these layers.

In the lithium ion secondary battery, the lithium ions have to be doped into the negative electrode at the time of the initial charging. Therefore, as described above, the lithium electrode is provided so as to be opposite to the negative electrode. Metal lithium or lithium-aluminum alloy can be used as the lithium electrode, for example. Specifically, a material containing at least a lithium element so as to be capable of supplying lithium ions can be used.

When the electric storage device is a lithium ion capacitor, a material that allows lithium ions or anions such as BF4⁻, PF6⁻, etc. that pairs with the lithium ion, to be reversibly doped can be used as an active material for the positive electrode, with respect to the negative electrode using the graphite. Examples of the positive electrode active materials include activated carbon, conductive polymer, polyacene-based material, etc.

Preferably, the activated carbon that is subject to alkali activation treatment using potassium hydroxide can be used. The activated carbon that is subject to the activation treatment has a large specific area compared to the activated carbon that is not subject to the activation treatment, which is preferable.

Metal lithium or lithium-aluminum alloy can be used as the lithium ion source for pre-doping the lithium ions into the negative electrode at the time of the initial charging. Specifically, a material containing at least a lithium element so as to be capable of supplying lithium ions can be used.

The negative electrode active material using the graphite or the positive electrode active material is formed into an electrode mixture layer together with a binder and, as needed, a conductive assistant. Usable binders for the mixture layer include rubber binder, or binder resin such as fluorine-based resin, thermoplastic resin, acrylic resin, etc. Examples of the rubber binder include SBR or NBR that is a diene-based polymer. Examples of the fluorine-based resin include polytetrafluoroethylene (PTFE), polyvinylidene fluoride (PDVF), etc. Examples of the thermoplastic resin include polypropylene, polyethylene, etc. Examples of the acrylic resin include acrylic acid 2-ethylhexyl, methacrylate acrylonitrile ethyleneglycol dimethacrylate copolymer, etc.

When the positive electrode active material used for the lithium ion secondary battery is vanadium oxide, for example, it is preferable that the binder is mixed with non-aqueous solvent to be dispersed, since the vanadium pentoxide dissolves in water.

Examples of the conductive assistant used for the mixture layer as needed include conductive carbon such as Ketchen black, metal such as copper, iron, silver, nickel, palladium, gold, platinum, indium, tungsten, etc., conductive metal oxide such as indium oxide, tin oxide, etc.

The aforesaid active material, binder, and as needed, conductive assistant can be formed into a slurry by using a solvent such as water or N-methyl pyrrolidone. The thus formed slurry can be coated on a punched surface of the current collector with a predetermined thickness. The slurry can be applied by a coater such as a die coater or comma coater. Thereafter, the mixture layer coated onto the current collector with a predetermined thickness is dried under vacuum at 150 °C for 12 hours, for example, thereby fabricating an electrode.

The negative electrode and the positive electrode having the aforesaid configuration are provided through electrolyte solution. An electrolyte is dissolved in the electrolyte solution. In the lithium ion secondary battery, lithium salts such as CF₃SO₃Li, C₄F₉SO₈Li, (CF₃SO₂)₂NLi, (CF₃SO₂)₃CLi, LiBF₄, LiPF₆, LiClO₄, etc. can be used as the electrolyte, for example. The electrolyte described above is dissolved in non-aqueous solvent for example.

In the case of a lithium ion secondary battery, examples of the non-aqueous solvent include chain carbonate, cyclic carbonate, cyclic ester, nitrile compound, acid anhydride, amide compound, phosphate compound, amine compound, etc. More specifically, examples thereof include ethylene carbonate, diethyl carbonate (DEC), propylene carbonate, dimethoxyethane, γ-butyloractone, n-methyl pyrrolidinone, N,N'-dimethyl acetoamide, acetonitrile, mixture of propylene carbonate and dimethoxyethane, mixture of sulfolane and tetrahydrofuran, etc.

The electrolyte layer interposed between the positive electrode and the negative electrode can be the electrolyte solution of the non-aqueous solvent having the electrolyte dissolved therein or a polymer gel (polymer gel electrolyte) containing the electrolyte solution. The one that can allow the lithium ions to smoothly move between the positive electrode and the negative electrode can be employed.

In the case of a lithium ion capacitor, an aprotic organic solvent can be employed, for example. The aprotic organic solvent forms electrolyte solution of aprotic organic solvent. Examples of the aprotic organic solvent include ethylene carbonate, propylene carbonate, dimethyl carbonate, diethyl carbonate, γ-butyloractone, acetonitrile, dimethoxyethane, tetrahydrofuran, dioxolane, methylene chloride, sulfolane, etc., wherein these material are used singly or mixed with one another.

An electrolyte that can generate lithium ions can be used. Examples thereof include LiClO₄, LiAsF₆, LiBF₄, LiPF₆, LiN(C₂F₅SO₂)₂, LiN(CF₃SO₂)₂, etc.

An electric storage device, such as a lithium ion secondary battery or a lithium ion capacitor, employing the graphite according to the present invention for the negative electrode is well adaptable to a product having mounted thereon an electric storage device, such as for an electric vehicle.

### EXAMPLES

Next, the effect obtained by the present invention in which the graphite described above is used as the negative electrode material will specifically be described with reference to Examples. The present invention is not limited to Examples described below.

### Example 1, Comparative Examples 1, 2

In Examples, an output characteristic of a lithium ion secondary battery using graphite, made by Timcal Ltd., according to the present invention for a negative electrode was verified. The graphite according to Example 1 is obtained by performing a CVD process on the KS-6 made by Timcal Ltd. In the CVD process, temperature was raised up to 900 °C at 5 °C/min., and bubbled nitrogen gas was sprayed into toluene solution for 10 hours with the temperature maintained at 900 °C. The obtained graphite had a grain diameter of 6 µm, and specific area of 3 m²/g as shown in Table 1. The total volume of mesopores was 0.015 ml/g, and the ratio of the volume of mesopores each having a pore diameter of 10nm (100 angstrom) or more and 40 nm (400 angstrom) or less to the total volume of mesopores was 40 %.

Table 1 summarizes characteristics of the three types of negative electrode active materials used in Example 1, and Comparative Examples 1 and 2.

**Table 1**

| | Grain diameter | Specific area | Total volume of mesopores | Ratio | (Content) Reference |
|---|---|---|---|---|---|
| | µm | m²/g | ml/g | % | |
| Example 1 | 6 | 3 | 0.015 | 40 | KS-6 CVD:A |
| Comparative Example 1 | 20 | 2 | 0.003 | 50 | Artificial graphite: B |
| Comparative Example 2 | 3 | 21 | 0.038 | 55 | KS-6: C |

On the other hand, artificial graphite (indicated by B in Table 1) and KS-6 (indicated by C in Table 1) were used as the negative electrode active material in the lithium ion secondary battery as Comparative Examples 1 and 2.

The average grain diameter of the artificial graphite B was 20 µm, and the average grain diameter of KS-6 C was 3 µm, as shown in Table 1. The specific areas of the respective graphites were 2 m²/g and 21 m²/g. The total volumes of mesopores of the respective graphites were 0.003 ml/g and 0.038 ml/g. The ratios of the volume of mesopores each having a pore diameter of 10 nm or more and 40 nm or less to the total volume of mesopores were 50 % and 55 %.

### Fabrication of negative electrode

6 parts by weight of acetylene black powder, 5 parts by weight of acrylate copolymer binder, 4 parts by weight of carboxyl methyl cellulose (CMC), and 200 parts by weight of ion-exchanged water were fully mixed by a mixer with 92 parts by weight of the graphite A according to the present invention, the artificial graphite B, and KS-6 C, respectively, to obtain slurries for a negative electrode.

Each of the obtained negative electrode slurries was applied onto both surfaces of copper expanded metal having a thickness of 32 µm and aperture ratio of 57 % by a vertical die coater that can simultaneously apply the slurry on both surfaces. Each of the negative electrode slurries was applied such that the specific weights of the active materials were equal to one another. Thereafter, the resultants were dried and pressed, whereby the negative electrodes A to C, each having a total thickness of 162 µm, were formed.

### Fabrication of positive electrode

100 parts by weight of commercially available LiCoO₂ powder with a grain diameter of 5 µm, and 5 parts by weight of graphite powder were added to the solution obtained by dissolving 3.5 parts by weight of polyvinylidene fluoride into 50 parts by weight of N-methyl pyrrolidone, and the resultant was fully mixed to obtain a positive electrode slurry 1. Both surfaces of an aluminum expandable metal having a thickness of 38 µm and aperture ratio of 45 % were coated with an aqueous carbon conductive coating with a vertical die coater that can simultaneously apply the coating onto both surfaces.

The resultant was dried to obtain a positive-electrode current collector having a conductive layer thereon. The total thickness (the sum of the current collector thickness and the conductive layer thickness) of the positive-electrode current collector was 51 µm, and most of the through-holes of the positive-electrode current collector were filled with the conductive coating. The thus formed positive electrode slurry 1 was applied onto both surfaces of the positive electrode current collector with one surface each by a comma coater. Then, the resultant was dried and pressed to obtain a positive electrode 1 having a thickness of 188 µm.

### Fabrication of electrode laminate unit

Each of the negative electrodes having a thickness of 140 µm and the positive electrode having a thickness of 188 µm were cut out into 2.4 cm x 3.8 cm. A nonwoven fabric made of cellulose/rayon having a thickness of 35 µm was used as a separator. Six negative electrodes and five positive electrodes were laminated alternately through the separator in a manner that welding parts of the negative electrode current collectors and the positive electrode current collectors to the connection terminal (hereinafter referred to as the terminal welding parts) were set in the opposite side.

The separators were arranged at the uppermost part and the lowermost part of the electrode laminate unit. Then, four sides of the structure were fastened with a tape, whereby the electrode laminate unit was formed. The terminal welding parts (five sheets) of the positive-electrode current collectors were ultrasonically welded to an aluminum positive electrode terminal (having a width of 10 mm, a length of 30 mm, and a thickness of 0.2 mm) that was obtained by heat-sealing a sealant film on a seal portion beforehand.

Similarly, the terminal welding parts (six sheets) of the negative-electrode current collectors were resistance-welded to a nickel negative electrode terminal (having a width of 10 mm, a length of 30 mm, and a thickness of 0.2 mm) that was obtained by heat-sealing a sealant film on a seal portion beforehand. The electrode laminate unit thus formed was placed in two outer films, each being deep-drawn with a size of 60 mm length, 30 mm width and 1.3 mm depth.

The two sides of the terminal parts and other one side of the outer film were heat-sealed. Then, the unit was vacuum-impregnated with an electrolyte solution. The electrolyte solution was formed by dissolving LiPF₆ at 1 mol/l into mixture solvent containing ethylene carbonate and dimethyl carbonate at a weight ratio of 1 : 3. Then, the remaining one side of the unit was heat-sealed under reduced pressure, and vacuum sealing was performed to assemble two cells of film-type lithium ion secondary battery.

### Evaluation of characteristic of cell

The thus assembled two cells of the film-type lithium ion secondary battery were charged at a constant current of 400 mA at 25 °C until the cell voltage reached 4.2 V, and then were charged for 6 hours by a constant-current constant-voltage charging method in which a constant voltage of 4.2 V was applied. Then, the cells were discharged at a constant current of 200 mA until the cell voltage reached 3.0 V. Thereafter, the cells were charged in a similar way, and then were discharged at a constant current of 2000 mA until the cell voltage reached 3.0 V. The discharge capacities at this time were measured and the results were shown in Table 2

**Table 2**

| | Negative electrode material | 200 mA discharge capacity (mAh) | 2000 mA discharge capacity (mAh) |
|---|---|---|---|
| Example 1 | Graphite A | 222 | 213 |
| Comparative Example 1 | Graphite B | 221 | 186 |
| Comparative Example 2 | Graphite C | 201 | 191 |

As shown in Table 2, Comparative Example 1 using the graphite B has a high discharge capacity at 200 mA, but low discharge capacity at 2000 mA. Comparative Example 2 using the graphite C has a high capacity ratio at 200 mA and 2000 mA, but a low initial charge/discharge efficiency, whereby the discharge capacity is low. Accordingly, the lithium ion secondary battery in Example 1 using the graphite A is preferable in obtaining high capacity and high output characteristic.

### Example 2, Comparative Examples 3 and 4

### Fabrication of positive electrode

Sawdust that was a row material was put into an electric furnace, and temperature was raised to 950 °C at a rate of 50 °C/hour under nitrogen airflow. Thereafter, the resultant was steam-activated for 12 hours with gaseous mixture of nitrogen and steam in a ratio of 1 : 1 so as to form an activated carbon with a specific area of 2450 m²/g. The obtained activated carbon was pulverized by an alumina ball mill pulverizer for 5 hours so as to obtain activated carbon powders each having an average grain diameter (D50) of 7 µm.

92 parts by weight of the above-mentioned activated carbon powders for the positive electrode, 6 parts by weight of acetylene black powder, 7 parts by weight of acrylate copolymer binder, 4 parts by weight of carboxymethyl cellulose (CMC), and 200 parts by weight of ion exchanged water were thoroughly mixed by a mixer so as to obtain a positive electrode slurry 2.

An aqueous carbon-based conductive coating was applied onto both surfaces of an aluminum expanded metal having a thickness of 38 µm and aperture ratio of 45 % by a vertical die coater that can simultaneously apply the coating on both surfaces. Thereafter, the resultant was dried, whereby a positive electrode current collector having the conductive layer formed thereon was obtained. The total thickness (the total of the thickness of the current collector and the thickness of the conductive layer) was 51 µm.

The through-holes were almost closed by the conductive coating. The positive electrode slurry 2 described above was applied on each surface of the positive electrode current collector by a comma coater, and the resultant was dried to obtain a positive electrode 2 having a thickness of 416 µm.

### Fabrication of laminate cell

Each of the negative electrodes A to C fabricated in Example 1 and Comparative Examples 1 and 2 and the positive electrode 2 were used to form an electrode laminate unit of Example 2, and Comparative Examples 3 and 4 in the same manner as in Example 1 and Comparative Examples 1 and 2. A lithium electrode was formed by pressing a metal lithium foil having a thickness of 140 µm onto a stainless steel mesh with a thickness of 80 µm.

The lithium electrode was located one by one on the uppermost part and the lowermost part of the electrode laminate unit such that it faces the negative electrode located at the outermost part. The negative electrodes (six sheets) and the stainless mesh on which the lithium metal was pressed were welded to be in contact with each other, whereby a three-electrode laminate unit in which the negative electrodes and the lithium metal foil were short-circuited was formed.

The terminal welding parts (five sheets) of the positive-electrode current collectors of the three-electrode laminate unit were ultrasonically welded to an aluminum positive electrode terminal (having a width of 10 mm, a length of 30 mm, and a thickness of 0.2 mm) that was obtained by heat-sealing a sealant film on a seal portion beforehand. Similarly, the terminal welding parts (six sheets) of the negative-electrode current collectors were resistance-welded to a nickel negative electrode terminal (having a width of 10 mm, a length of 30 mm, and a thickness of 0.2 mm) that was obtained by heat-sealing a sealant film on a seal portion beforehand. The three-electrode laminate unit thus formed was placed in two outer films, each being deep-drawn with a size of 60 mm length, 30 mm width and 2.2 mm depth.

The two sides of the terminal parts and other one side of the outer film were heat-sealed. Then, the unit was vacuum-impregnated with an electrolyte solution. The electrolyte solution was formed by dissolving LiPF₆ at 1 mol/l into mixture solvent containing ethylene carbonate and dimethyl carbonate at a weight ratio of 1 : 3. Then, the remaining one side of the unit was heat-sealed under reduced pressure, and vacuum sealing was performed to assemble three cells of each of the film-type lithium ion capacitors A to C.

### Evaluation of characteristic of cell

The cells were left for 14 days at room temperature, and then one cell was disassembled. It was confirmed that no metal lithium remained in the cells.

The remaining two cells of the film-type lithium ion capacitor were left for 24 hours at 25°C and -20°C respectively. Thereafter, the cells were charged by a constant-current constant-voltage charging method for one hour in which a constant voltage was applied at a constant current of 400 mA until the cell voltage reached 3.8 V, and then a constant voltage of 3.8 V was applied. Then, the cells were discharged at a constant current of 400 mA until the cell voltage reached 2.2 V. The cycle of the charging operation to 3.8 V and the discharging operation to 2.2 V was repeated, and when the cycle was repeated 3 times, the discharge capacity was measured. Table 3 shows the results.

**Table 3**

| | Negative electrode material | Discharge capacity | | Energy density |
|---|---|---|---|---|
| | | 25 °C | -20 °C | 25 °C |
| | | mAh | mAh | Wh/l |
| Example 2 | Graphite A | 36 | 25 | 17 |
| Comparative Example 3 | Graphite B | 37 | 19 | 17 |
| Comparative Example 4 | Graphite C | 36 | 23 | 17 |

The positive electrode and the negative electrode of one cell of each capacitor were short-circuited so as to measure the potential of the positive electrode. The potentials of the positive electrodes of the cells were 2 V or less.

The potential of the positive electrode, after the positive electrode and the negative electrode were short-circuited, was 2.0 V or less. Therefore, it is considered that a laminate film-type capacitor having high energy density was obtained as shown in Table 3. The lithium ion capacitor A having the graphite A used for the negative electrode active material had high capacity even at -20 °C as shown in Table 3. It was found that the use of the graphite A was preferable even in the lithium ion capacitor in order to achieve high capacity and low-temperature characteristic.

When the graphite C was used in the lithium ion secondary battery, the initial charge/discharge efficiency was low and the capacity was low. However, as shown in Table 3, when the graphite C was used in the lithium ion capacitor having lithium ions pre-doped beforehand, high capacity was obtained as shown in Comparative Example 4 in Table 3. It is considered that this is because the specific area was high. The low-temperature characteristic was lowered slightly as compared with that of the graphite A, and it is considered that this is because the specific area is large and accordingly the volume of micropores having a small diameter is large.

It is considered this is because lithium ions or solvated lithium ions are difficult to move at positions where the pore diameter is small; therefore, movement following capability of ions to the charge/discharge becomes insufficient, and output characteristic is low. On the other hand, it is considered that the graphite B whose total volume of mesopores was low was high in the initial efficiency (capacity), but low in the output characteristic and low-temperature characteristic because the volume of mesopores each having a pore diameter of 10 nm or more and 40 nm or less is small, even though the specific area was small.

Accordingly, it was found that the lithium ion secondary battery and the lithium ion capacitor using the graphite A according to the present invention were excellent in the output characteristic and low-temperature characteristic, compared to those using the artificial graphite B and the graphite C of KS-6.

The present invention has been specifically described above with reference to the embodiments and examples. The present invention is not limited to the aforesaid embodiments and examples, and various modifications are possible without departing from the scope of the present invention.

The present invention is well adaptable to a field of a negative electrode used in a lithium ion secondary battery and a lithium ion capacitor.

## Claims

1. A carbon material for a negative electrode (11, 110), having a graphite crystal structure, for use in an electric storage device including an aprotic organic solvent solution of lithium salt as an electrolyte solution, wherein the carbon material for a negative electrode (11, 110) is a mesoporous graphite having a specific area measured in accordance with BET method within the range of 0.01 m²/g or more and 5 m²/g or less, wherein the total volume of mesopores defined to be micropores each having a pore diameter within the range of 2 nm or more and 50 nm or less is within the range of 0,005 ml/g or more and 1.0 ml/g or less, and wherein the volume of mesopores each having a pore diameter of 10 nm or more and 40 nm or less is 25 % or more and 85 % or less of the total volume of mesopores.

2. The carbon material according to claim 1,
wherein the mesoporous graphite is obtained by performing a CVD process on mesoporous graphite having a specific area greater than 5 m²/g measured in accordance with the BET method.

3. The carbon material according to claim 1 or 2,
wherein the mesoporous graphite is obtained by pulverizing graphite.

4. The carbon material according to any one of claims 1 to 3,
wherein the mesoporous graphite is artificial graphite.

5. An electric storage device,
including the carbon material for a negative electrode (11, 110) according to any one of claims 1 to 4 as a negative electrode active material.

6. The electric storage device according to claim 5,
wherein the electric storage device is a lithium ion secondary battery (10).

7. The electric storage device according to claim 5,
wherein the electric storage device is a lithium ion capacitor (100).

8. A product having mounted thereon the electric storage device according to any one of claims 5 to 7.
